# EUROPEAN PATENT APPLICATION

(11) **EP 0 876 871 A1**
(43) Date of publication of application: **11.11.1998**
(21) Application number: 98201028.2
(22) Date of filing: 01.04.1998
(51) Int. Cl.: B23K 37/00, B23K 37/02

(54) **Welding vehicle**

(30) Priority: 01.04.1997 NL 1005684
(71) Applicant: van den Boogaard, Carolus Cornelis Augustinus Maria, 4911 AW Den Hout (NL)
(72) Inventor: van den Boogaard, Carolus Cornelis Augustinus Maria, 4911 AW Den Hout (NL)
(74) Representative: Bartelds, Erik

(57) **Abstract**

The invention relates to a welding vehicle provided with a frame which is adapted to receive a welding apparatus, a mobile and steerable undercarriage supporting the frame and drive means accommodated in the frame. Such a steerable welding vehicle can travel without guiding, whereby welding can be carried out without preparatory activities.

The undercarriage can have at least one steerable wheel and at least two non-steered wheels mutually connected with interposing of a differential. The non-steered wheels can herein be driven. One or more magnets can be arranged in the frame to hold the vehicle fixedly on a surface.

## Description

The invention relates to a welding vehicle provided with a frame which is adapted to receive a welding apparatus, a mobile undercarriage supporting the frame and drive means accommodated in the frame. Such a welding vehicle is known and is used for instance to perform relatively prolonged and monotonous welding operations, such as the connection of relatively large plate surfaces by butt welding, welding of stiffening elements and the like onto plates.

The known welding vehicle can herein travel along a guide arranged on the surface on which the welding operation must be carried out. This guide must therefore be arranged on the surface before welding, which is extremely time-consuming because the guide must follow exactly the course of the desired welded joint and must therefore be placed very precisely.

The invention therefore has for its object to provide a welding vehicle of the above described type, wherein this drawback does not occur. This is achieved according to the invention in that the undercarriage takes a steerable form. Steering of the undercarriage obviates the necessity for a separate guide, so that the preparation time for a welding operation is considerably shortened, since the steerable welding vehicle can be placed on the workpiece in simple manner and moved along the welding seam. Steering of the welding vehicle can herein take place manually but it is of course also conceivable for the vehicle to be steered electronically along the welding seam, for instance using a sensor which is connected to the steering and which is moved along the welding seam, or optionally a light beam-follower system.

When the undercarriage has at least three wheels, at least one of which is steerable, a vehicle is obtained which is stable and still steers well.

The undercarriage of the welding vehicle can further have at least two non-steered wheels which are mutually connected with interposing of a differential. Slipping of the non-steered wheels during a steering movement is thus prevented.

According to a preferred embodiment of the welding vehicle, the non-steered wheels are drivably connected to the drive means. By driving only the non-steered wheels the construction of the vehicle is greatly simplified. The drive means can herein comprise a motor connected for driving to the differential. The drive means can also comprise an individual drive motor for each non-steered wheel and the motors can each be connected controllably to an electronic differential circuit.

In order to prevent any of the rigidly suspended driven wheels from coming to hang freely as a result of an unevenness in the surface and continuing to turn, whereby the other driven wheel would come to a stop due to the operation of the differential and the vehicle would no longer be propelled, the or each non-driven wheel is connected to the frame for displacement transversely of its axle direction. The non-driven wheels can thus follow the surface without one of the driven wheels being thereby "lifted up".

The welding vehicle is preferably provided with at least one magnet connected to the frame, whereby the vehicle is pulled against the surface. This magnet can be an electromagnet, the action of which is easily controllable.

When provided with movably suspended wheels, the undercarriage herein preferably has at least two non-driven wheels which are mutually connected by an axle movably arranged in the frame. An inward movement of the one wheel is thus automatically translated into an outward movement of the other wheel, whereby a resetting force is exerted on the inward moved wheel. Thus is prevented that all movably suspended wheels are urged simultaneously to their inward moved position by the magnetic force.

The invention will now be elucidated on the basis of three examples, wherein reference is made to the annexed drawings, in which:
fig. 1 shows a cut-away perspective view of a welding vehicle according to the invention,
fig. 2 shows a cut-away perspective detail view of the driving of an alternative embodiment of the vehicle shown in fig. 1, and
fig. 3 is a schematic perspective detail view of the movable suspension of the steering wheels in yet another embodiment of the vehicle.

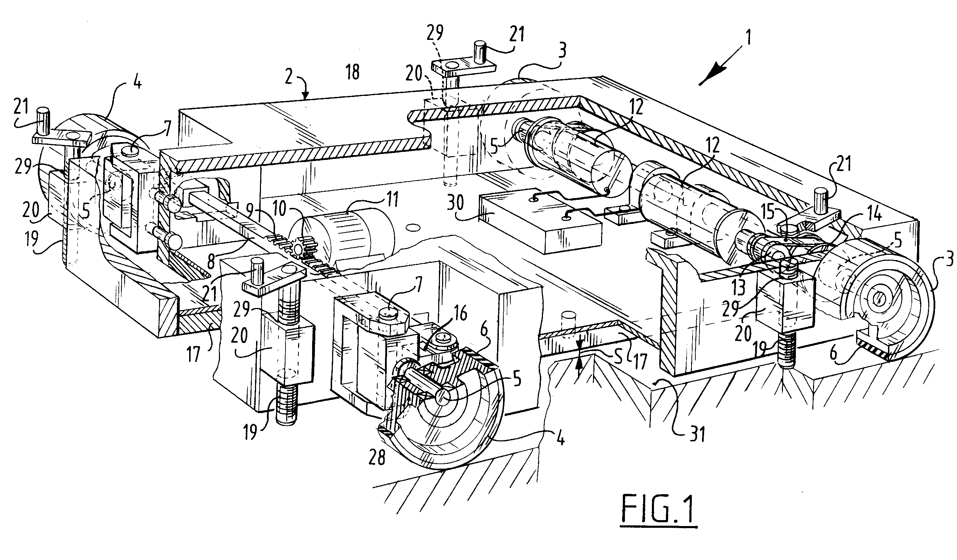

A welding vehicle 1 (fig. 1) comprises a frame 2 which is adapted on its top side 18 to receive a welding apparatus (not shown). Frame 2 is supported by an undercarriage which is formed in the shown embodiment by two non-steered wheels 3 and two steerable wheels 4. Each wheel 3, 4 is herein rotatably mounted on a wheel axle 5 with interposing of a bearing 28 and is provided with a rubber tread 6. Steerable wheels 4 are herein further pivotable on a steering shaft 7 and each connected to a steering arm 16, which steering arms 16 are mutually connected by a steering rod 8. This latter has a toothed part 9 which co-acts with a pinion 10 of an electronically controlled steering motor 11. Non-steered wheels 3 are mutually connected with interposing of a differential. In the shown embodiment each non-steered wheel 3 is connected to its own drive motor 12 with built-in speed reduction which has a pulley 13 which by means of a belt 15 drives a pulley 14 connected to the associated wheel 3. In order to cause the non-steered wheels to follow a steering movement of vehicle 1, both drive motors 12 are connected to an electronic differential circuit 30 in which the desired rotation speed for each drive motor 12 is determined. This differential circuit 30 can herein respond to a detected difference in friction undergone by both wheels 3 and can thus operate as a conventional mechanical differential, but it is also possible for the bend radius of vehicle 1 and the associated rotation speeds of both non-steered wheels 3 to be calculated in differential circuit 30 on the basis of steering data from steering motor 11 and the control signals to be sent to both drive motors 12 on the basis thereof.

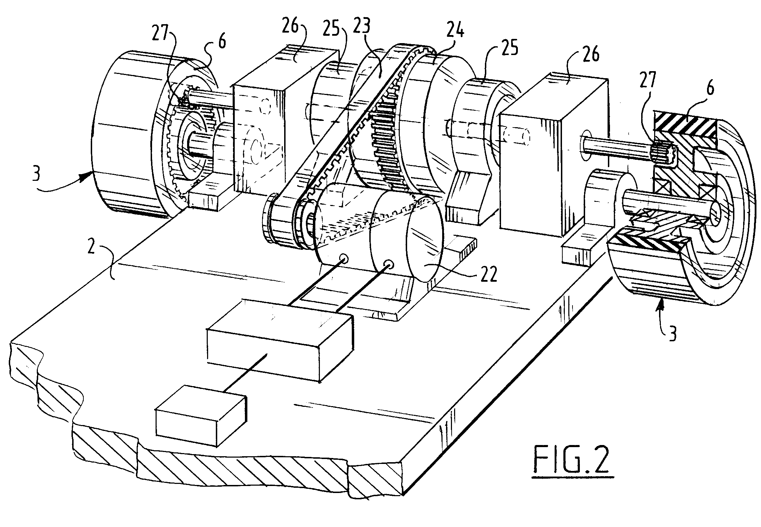

In an alternative embodiment (fig. 2) the non-steered wheels 3 are driven by a single drive motor 22 which is connected by means of a drive belt 23 to a mechanical differential 24. The output shafts of differential 24 are each connected herein to one of the wheels 3 with interposing of a brake 25 and a reduction gear unit 26. Further arranged in each of the wheels 3 is a planetary gear 27 which forms a final reduction stage.

For use on sloping, practically vertical or even downward facing workpieces, the welding vehicle 1 can be provided with a magnet 17 arranged in frame 2. As magnet can be applied one or more permanent magnets, electromagnets or combinations of the two. Vehicle 1 is pulled against the workpiece by this magnet 17, wherein the undercarriage ensures that a certain air gap s is maintained between magnet 17 and workpiece 31. In order to enable release of vehicle 1 once again from workpiece 31 in simple manner, sleeves 20 can be arranged at different locations on frame 2 which are provided with a threaded opening 29. In this threaded opening can be rotated a screw spindle 19 which is provided on its outer end with a handle 21. By rotating screw spindle 19 downward against the surface or workpiece the vehicle 1 is raised slightly, whereby the air gap between magnet 17 and the workpiece becomes larger and the magnetic force thus reduced.

Although in the above shown embodiments all wheels 3, 4 are rigidly connected to the frame 2 of vehicle 1, it is also possible to arrange these wheels in frame 2 for movement transversely of the surface 31. In particular the non-driven, steering wheels 4 can be suspended movably in frame 2 in this manner. This is important when vehicle 1 is displaced over an irregularly formed workpiece 31, because with a completely rigid wheel suspension there is the danger that when three of the four wheels make contact with surface 31 one of the wheels comes off the surface. When it is one of the driven wheels 3 which disengages, this will result in the suspended wheel continuing to turn whereby the other driven wheel will come to a stop due to the operation of the differential 24 respectively 30 and vehicle 1 will no longer be propelled. When workpiece 31 slopes, the vehicle may then even roll away in unintended directions.

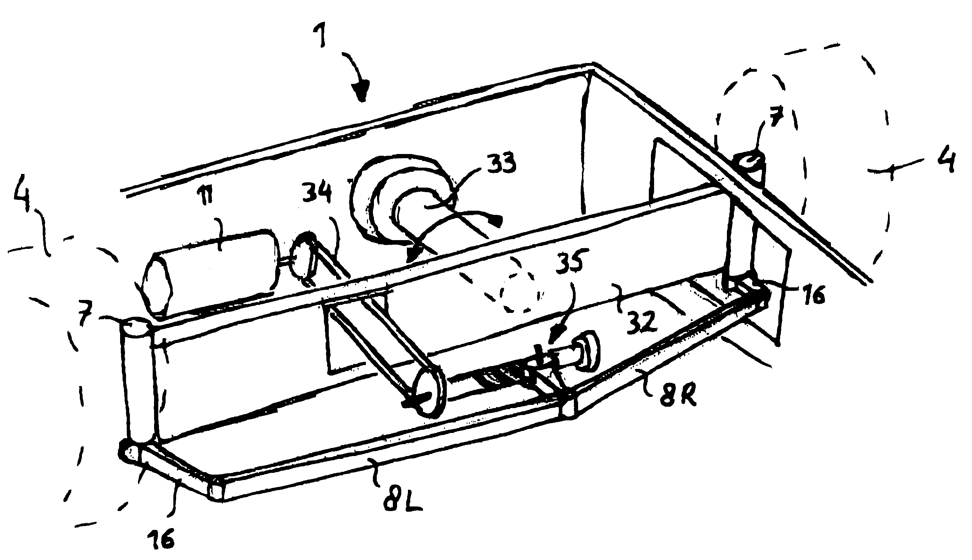

Any conventional wheel suspension is in principle suitable for use. However, when vehicle 1 is pulled onto surface 31 by means of one or more magnets 17, it is important that the inward movement of one of the wheels is automatically compensated by an outward movement of another wheel. In the case of individual suspension of the wheels, these would anyway all be urged simultaneously to their position moved fully inward by the magnetic force. Vehicle 1 is therefore provided according to an alternative embodiment (fig. 3) with a rigid axle 32 which connects the two non-driven, steerable wheels 4 and which is received movably in frame 2. In the shown embodiment this axle 32 is embodied as tumbler shaft and is pivotable on a shaft 33 placed in the central longitudinal plane of vehicle 1. The steering mechanism, which is formed in the shown embodiment by a transversely placed steering motor 11 which is connected via a pulley 34 to a worm wheel transmission 35 which engages on both half steering arms 8L, 8R, is connected to tumbler shaft 32 so that a rocking movement of this shaft 32 does not result in an unintended steering movement.

The operation of vehicle 1 is now as follows. Vehicle 1 is placed on a workpiece at the beginning of a seam between the workpiece and a component for connecting thereto. This may for instance be two plate surfaces of a ship's hull to be butt-welded to each other, a frame or other large component for welding onto a ship's hull. Because vehicle 1 is equipped with magnet 17, the position of the workpiece is herein of no importance. Vehicle 1 can thus be applied on inclining workpieces, along vertically oriented workpieces, and even suspended upside down on a downward facing workpiece. Vehicle 1 is herein positioned such that the welding apparatus is directed precisely at the seam for welding. The welding apparatus and drive motor(s) 12 respectively 22 of vehicle 1 are then started, whereby vehicle 1 begins to move along the seam, wherein a welded joint is simultaneously formed.

When vehicle 1 is in danger of deviating from the seam, the deviation can be corrected by steering the wheels 4. This correction can take place manually by the person controlling and steering vehicle 1, but can also be carried out automatically. For this purpose vehicle 1 can be equipped with a sensor which is connected in controlling manner to steering motor 11, and which follows the seam at all times during displacement of vehicle 1. A light beam for instance can also be directed along the seam, wherein vehicle 1 can then be provided with a photo-electric control.

Although the above refers always to a welding vehicle, it will be apparent to the skilled person that such a vehicle is also suitable for performing operations other than welding. The vehicle could for instance be provided with a riveting apparatus, a glue gun or any other tool. It will also be apparent that methods of steering other than described above could also be applied, all the more so since only small demands are made of the steering because the seams for following will generally only display slight curvature. Use could thus be made for steering of a separated drive of the wheels on either side of the vehicle in the manner known in caterpillar vehicles. The vehicle could indeed be embodied herein as caterpillar vehicle, although a differential circuit as described above could also be applied for each pair of wheels.

## Claims

1. Welding vehicle provided with a frame which is adapted to receive a welding apparatus, a mobile undercarriage supporting the frame and drive means accommodated in the frame, **characterized in that** the undercarriage takes a steerable form.

2. Welding vehicle as claimed in claim 1, **characterized in that** the undercarriage has at least three wheels, at least one of which is steerable.

3. Welding vehicle as claimed in claim 2, **characterized in that** the undercarriage has at least two non-steered wheels which are mutually connected with interposing of a differential.

4. Welding vehicle as claimed in claim 3, **characterized in that** the non-steered wheels are drivably connected to the drive means.

5. Welding vehicle as claimed in claim 4, **characterized in that** the drive means comprise a motor connected for driving to the differential.

6. Welding vehicle as claimed in claim 4, **characterized in that** the drive means comprise an individual drive motor for each non-steered wheel and the motors can each be connected controllably to an electronic differential circuit.

7. Welding vehicle as claimed in any of the foregoing claims, **characterized in that** the or each non-driven wheel is connected to the frame for displacement transversely of its axle direction.

8. Welding vehicle as claimed in any of the foregoing claims, **characterized by** at least one magnet connected to the frame.

9. Welding vehicle as claimed in claim 8, **characterized in that** the magnet is an electromagnet.

10. Welding vehicle as claimed in claim 7 in combination with claim 8 or 9, **characterized in that** the undercarriage has at least two non-driven wheels which are mutually connected by an axle movably arranged in the frame.
